# EUROPÄISCHE PATENTSCHRIFT

(11) **EP 0 804 984 B1**
(45) Veröffentlichungstag und Bekanntmachung des Hinweises auf die Patenterteilung: **02.02.2000**
(21) Anmeldenummer: 97810263.0
(22) Anmeldetag: 28.04.1997
(51) Int. Cl.: B23B 29/034

(54) **Ausdrehkopf**
Boring head
Tête à aléser

(30) Priorität: 02.05.1996 CH 110996
(43) Veröffentlichungstag der Anmeldung: 05.11.1997
(73) Patentinhaber: Heinz Kaiser AG, 8153 Rümlang (CH)
(72) Erfinder: Kaiser, Heinz, 8304 Wallisellen (CH); Pape, Dieter, 8153 Rümlang (CH)
(74) Vertreter: Groner, Manfred

(56) Entgegenhaltungen:
- DE-A- 3 926 026
- JP-A- 1 171 707

## Beschreibung

Die Erfindung betrifft einen Ausdrehkopf nach dem Oberbegriff des Anspruchs 1 (siehe DE-A-3 926 026).

Ausdrehköpfe dieser Art werden hauptsächlich zur Bearbeitung engtolerierter Bohrungen verwendet und sind dazu in eine drehend angetriebene Spindel einspannbar. Die technische Entwicklung geht nun dahin, zunehmend bessere und vor allem härtere und warmfestere Schneidstoffe zu verwenden und mit diesen bei zunehmend höheren Drehzahlen zu arbeiten. Da nun verstellbare einschneidige Ausdrehköpfe konstruktionsbedingt nicht rotationssymmetrisch sind, weisen sie eine mehr oder weniger grosse Unwucht auf. Diese kann am Bearbeitungssystem Schwingungen auslösen, welche sich nachteilig auf die ausgedrehte Bohrung auswirken. Insbesondere leidet die Mass- und Formgenauigkeit sowie die Oberflächengüte durch solche Vibrationen, zudem wird die Standzeit des Schneidstoffes stark reduziert.

Im Stand der Technik gibt es zahlreiche Vorschläge, wie bei einem Ausdrehkopf die Unwucht ausgeglichen werden könnte. Beispielsweise zeigt die DE-C-35 10 259 einen rotierenden Feinbohrkopf für eine Werkzeugmaschine, bei dem am Umfang des Werkzeugkopfes zwei Gewichte angebracht sind, die mit einem Seilzug verbunden und über einen mit Skalen versehenen Ring verstellbar sind.

Die DE-C-42 42 063 offenbart ein Ausdrehwerkzeug, bei dem ein automatischer Unwuchtausgleich vorgesehen ist. Dazu ist ein zweiarmiger Übertragungshebel im Werkzeugkörper gelagert, der mit einem Arm an einem Antriebsschlitten und mit dem anderen Arm am Werkzeugschlitten angreift. Beim Verschieben des Antriebsschlittens wird der Werkzeugschlitten gegenläufig mitgenommen. Der Unwuchtausgleich erfolgt hier automatisch und ist abhängig von der Durchmesserverstellung.

Die gattungsbildende DE-A-39 26 026 zeigt einen Ausdrehkopf mit einem Übertragungsorgan, mit dem eine radiale Verstellung des Werkzeugträgers auf das Gegengewicht übertragen wird. Grundsätzlich sind das Gegengewicht und der Werkzeugträger mittels Federelementen durch Vorspannung fixiert. Der Verstellweg des Werkzeugträgers ist sehr klein. Bei hohen Drehzahlen ist es durchaus möglich, dass die Fliehkräfte grösser sind als die Vorspannkräfte, was zwangsläufig zu unstabilen Verhältnissen führt.

Der Erfindung liegt die Aufgabe zugrunde, einen Ausdrehkopf der genannten Gattung zu schaffen, der sich für hohe Drehzahlen besonders eignet und eine kompaktere Ausführung ermöglicht. Die Aufgabe ist gemäss Anspruch 1 gelöst.

Beim erfindungsgemässen Ausdrehkopf ist gewährleistet, dass das bewegliche Gegengewicht als auch der bewegliche Werkzeugträger in der gewählten Einstellung einwandfrei fixiert werden können. Ein ungewollt selbsttätiges Verstellen dieser Teile durch Fliehkräfte bei hohen Drehzahlen ist damit vermieden. Da die beiden genannten Teile gleichzeitig festgeklemmt werden, genügt ein einziger Klemmvorgang. Dies erlaubt eine konstruktiv vergleichsweise einfache und kompakte Ausführung.

Nach einer Weiterbildung der Erfindung ist gleichzeitig auch der Feinverstellmechanismus festklemmbar. Damit können sämtliche bei der Einstellung bewegten Teile einwandfrei und durch einen einzigen Klemmvorgang fixiert werden.

Eine besonders einfache Realisierung der Erfindung ergibt sich dann, wenn das Klemmorgan nach einer Weiterbildung der Erfindung eine Schraube aufweist, die zwischen das Gegengewicht und den Werkzeugträger eingreift und gleichzeitig an das Gegengewicht und den Werkzeugträger anlegbar ist. Dies ermöglicht eine besonders kompakte Ausführung und für den Klemmvorgang ist lediglich die Bewegung einer Schraube notwendig. Das Gegengewicht und der Werkzeugträger können dann in vergleichsweise kurzem Abstand zueinander im Werkzeugkörper gelagert werden.

Die Bewegungsübertragung zwischen dem Werkzeugträger und dem Gegengewicht erfolgt nach einer Weiterbildung der Erfindung durch eine Zahnwalze, die drehbar im Werkzeugkörper gelagert ist und mit dem Gegengewicht und dem Werkzeugträger kämmt. Diese Übertragungsvorrichtung ist sehr einfach und platzsparend und trägt ebenfalls zu einer sehr kompakten Ausführung des Ausdrehkopfes bei.

Der erfindungsgemässe Ausdrehkopf weist vorzugsweise einen definierten Arbeitsbereich auf, das heisst die Unwuchtverhältnisse sind in jeder Einstellung bekannt und werden durch das entsprechend positionierte Gegengewicht weitgehend ausgeglichen. Da die Bewegungsübertragung wenig Raum beansprucht, kann der Werkzeugträger vergleichsweise gross ausgeführt werden, was aus Stabilitätsgründen vorteilhaft ist. Die beim Verschieben des Werkzeugträgers entstehende vergleichsweise grosse Unwucht wird vorzugsweise mit einem Gegengewicht kompensiert, das einen Schwermetallkern aufweist.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
Figur 1 einen teilweise geschnittenen Ausdrehkopf gemäss der Erfindung,
Figur 2 einen Schnitt entlang der Linie II-II der Figur 1,
Figur 3 einen Schnitt entlang der Linie III-III der Figur 1,
Figur 4 einen Schnitt entlang der Linie IV-IV der Figur 2, und
Figur 5 einen Schnitt durch eine weitere Variante eines erfindungsgemässen Ausdrehkopfes.

Der Ausdrehkopf 1 weist einen Werkzeugkörper 2 auf, in dem in einer Querbohrung 17 ein Werkzeugträger 4 verstellbar gelagert ist. Die Verstellung erfolgt mit einem Feinverstellmechanismus 3, der eine Skalenscheibe 23 besitzt, die mit einer Zustellschraube 11 verbunden ist. Der Feinverstellmechanismus kann im wesentlichen gemäss der CH-A-641 706 des Anmelder ausgebildet sein. Gegenüber der Skalenscheibe 23 ist am Werkzeugträger 4 mittels einer Befestigungsschraube 25 ein Halter 24 für eine Wendeschneidplatte 5 unverrückbar angebracht. Durch Drehen der Zustellschraube 11 kann der Werkzeugträger 4 mit dem Halter 24 in der Bohrung 17 verschoben und damit der wirksame Arbeitsdurchmesser verändert werden.

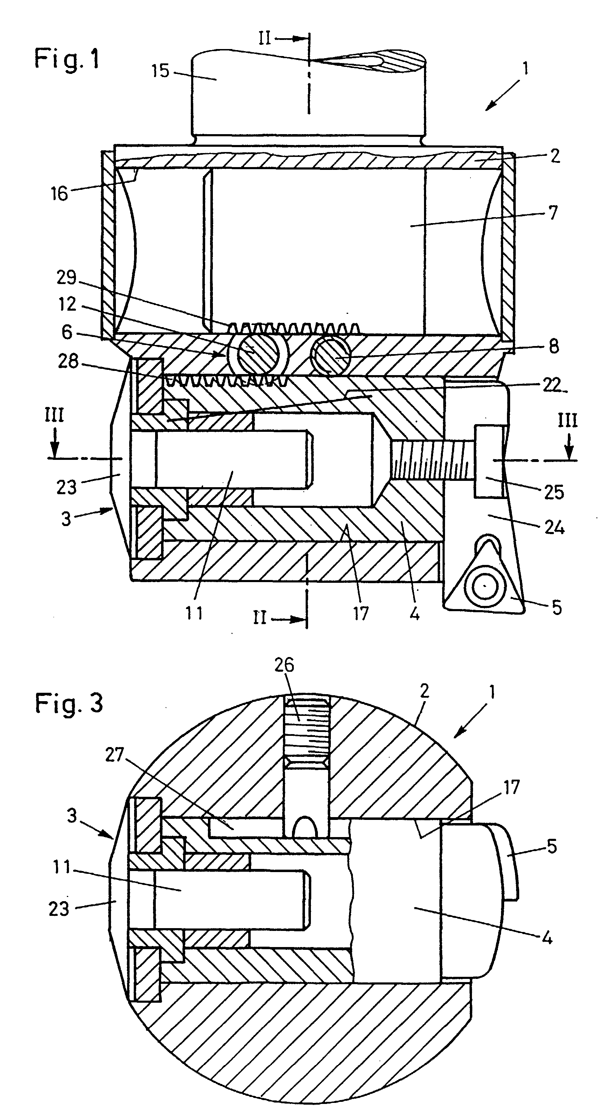

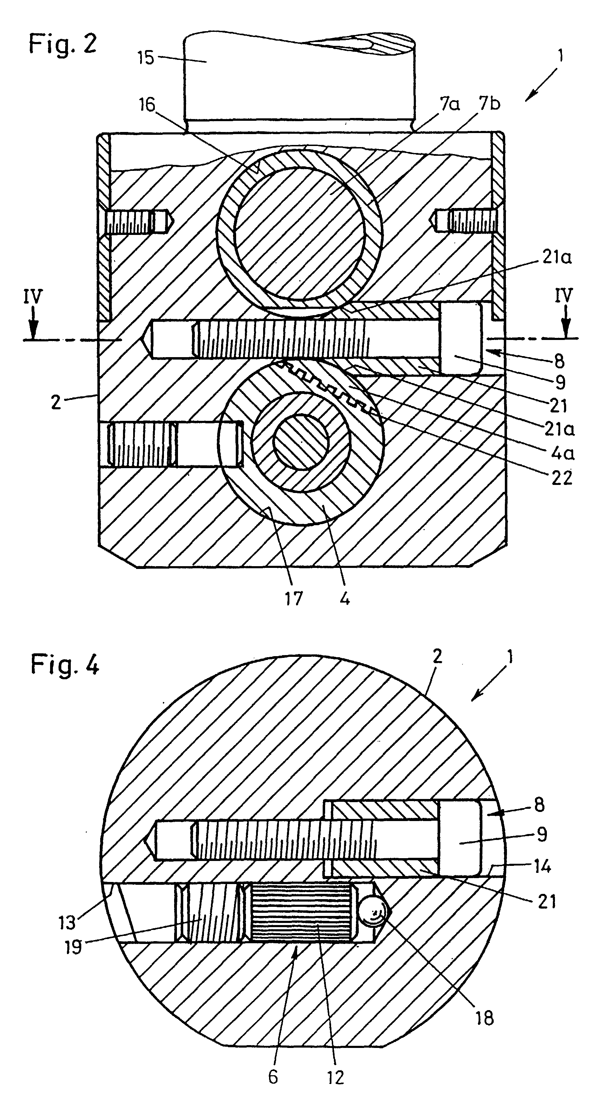

Die beim Verstellen des Werkzeugträgers 4 entstehende Unwucht wird durch eine Gegenbewegung eines Gegengewichtes 7 ausgeglichen, das in einer Querbohrung 16 des Werkzeugkörpers 2 gelagert ist. Die Übertragung der Bewegung des Werkzeugträgers 4 auf das Gegengewicht 7 erfolgt mittels einer Übertragungsvorrichtung 6, die eine Zahnwalze 12 aufweist, welche in einer Querbohrung 13 des Werkzeugkörpers drehbar gelagert ist. Die Lagerung erfolgt gemäss Figur 4 mit einer Kugel 18 sowie einem Lagerstift 19. Die Zahnwalze 12 kämmt mit einer Zahnung 28 des Werkzeugträgers 4 und einer Zahnung 29 des Gegengewichts 7. Der Werkzeugträger 4 ist begrenzt verstellbar und weist dazu gemäss Figur 3 eine seitliche Ausnehmung 27 als Wegbegrenzung auf, in die ein Stift 26 eingreift. In der Figur 1 ist der Werkzeugträger 4 in der linken Endstellung gezeigt. Wird er durch Drehen der Zustellschraube nach aussen verschoben, so dreht zwangsläufig die Zahnwalze 12 im Gegenuhrzeigersinn und verschiebt das Gegengewicht 7 um die gleiche Strecke in entgegengesetzter Richtung. Das Gewicht des Gegengewichtes 7 ist auf dasjenige des Werkzeugträgers 4 mit dem Halter 24 und den anderen damit beweglichen Teilen abgestimmt. In jeder Verstellposition des Werkzeugträgers 4 ist damit der Ausdrehkopf 1 als Ganzes statisch ausgewuchtet. Damit das Gegengewicht 7 bei möglichst kleinem Volumen das gleiche Gewicht wie der Werkzeugträger 4 mit aufgeschraubtem Halter 24 aufweist, ist dieses mit einem Schwermetallkern 7a versehen, der in eine Hülse 7b eingepresst ist.

Alle bei einer Verstellung bewegten Teile werden nach erfolgter Einstellung mit einem Klemmorgan 8 fixiert. Dieses Klemmorgan 8 weist eine Klemmschraube 9 mit einem hülsenförmigen Klemmteil 21 auf, und ist in eine Stufenbohrung 14 eingesetzt. Die Schraube 9 ist im unteren Teil der Stufenbohrung 14 in Gewindeeingriff mit dem Werkzeugkörper 2. An einem inneren Ende der Klemmhülse 21 sind an dieser keilförmige Klemmflächen 21a angebracht, die gleichzeitig aussenseitig an das Gegengewicht 7 und den Werkzeugträger 4 durch Eindrehen der Klemmschraube 9 anlegbar sind. Die Figur 2 zeigt die Stellung des Klemmteils 21, bei welcher die Flächen 21a in der genannten Weise angelegt sind. Das Gegengewicht 7 als auch der Werkzeugträger 4 sind damit mit dem Werkzeugkörper 2 verspannt und gegen eine unbeabsichtigte Verstellung fixiert.

Wie die Figuren 1 und 2 zeigen, ist in den Werkzeugträger 4 ein schräg verlaufender Schlitz 22 eingearbeitet. Dieser verläuft gemäss Figur 2 geneigt zur Längsrichtung der Klemmschraube 9 und ist so positioniert, dass der zum Schlitz 22 aussen liegende Teil 4a des Werkzeugträgers 4 dem Klemmorgan 8 gegenüber liegt. Wird nun der Klemmteil 21 an den Werkzeugträger 4 angelegt, so wird der Teil 4a durch die auf diesen einwirkende Kraft entsprechend der Breite des Schlitzes 22 geringfügig gegen die Zustellschraube 11 hin bewegt. Diese vergleichsweise kurze Bewegung genügt, um die Zustellschraube 11 festzuklemmen und damit ebenfalls zu fixieren. Mit dem Klemmorgan 8 können somit gleichzeitig das Gegengewicht 7, der Werkzeugträger 4 und die Zustellschraube 11 fixiert werden. Zum Lösen dieser Fixierung wird die Klemmschraube 9 durch Drehen in Figur 2 nach rechts bewegt. Die Klemmung wird damit gelöst und der Werkzeugträger 4 kann nun für eine weitere Durchmessereinstellung wie oben erwähnt verstellt werden. Wie die Figuren 1 und 2 zeigen, ist der Abstand zwischen dem Gegengwicht 7 und dem Werkzeugträger 4 im wesentlichen gleich dem Durchmesser der Klemmschraube 9 und damit vergleichsweise klein.

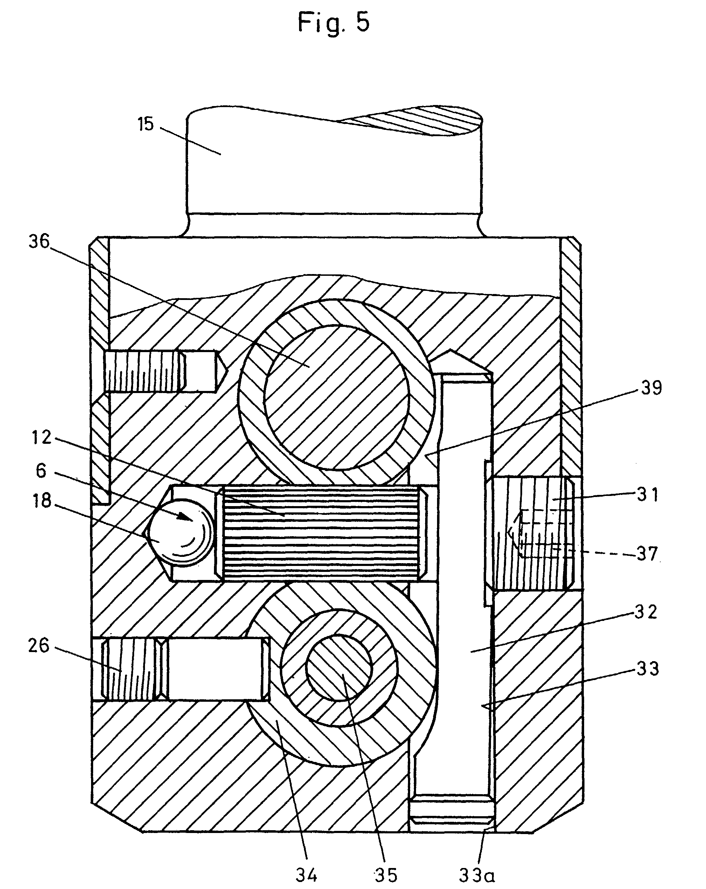

Bei der Ausführung nach Figur 5 wird durch Anziehen einer Schraube 31 auf einen Klemmbolzen 32 ein Druck quer zu seiner Längsrichtung ausgeübt. Zum Drehen der Schraube 31 weist diese eine mehrkantige Ausnehmung 37 auf. Der Klemmbolzen 32 ist in einer Bohrung 33 des Körpers 38 lediglich am Bohranfang 33a geführt, ansonsten besitzt er auf seiner ganzen Länge in der Bohrung 33 seitliches Spiel. Der Klemmbolzen 32 kann sich somit um einen bestimmten Winkel drehen, wobei der Drehpunkt am Bohrungsanfang 33a ist.

Wie ersichtlich, ist der Klemmbolzen 32 mit einer Anflachung 39 versehen und liegt mit dieser am Werkzeugträger 34 an.

Der von der Schraube 31 erzeugte Druck wird etwa im Verhältnis 2:1 auf den Werkzeugträger 34 übertragen, wodurch dieser sicher geklemmt wird. Der höhere Druck bewirkt auch eine geringe Deformation des Werkzeugträgers 34, so dass eine Zustellschraube 35 ebenfalls blockiert wird. Der Klemmbolzen 32 ist so ausgelegt, dass in ungeklemmtem Zustand zwischen Klemmbolzen 32 und Gegengewicht 36 etwas Spiel ist. Damit wird erreicht, dass sich der Klemmdruck zuerst und stärker auf den Werkzeugträger 34 und erst anschliessend und abgeschwächt auf das Gegengewicht 36 auswirkt.

Der Klemmbolzen 32 ist so dimensioniert, dass er beim Betätigen der Klemmschraube 34 elastisch verformt wird und damit eine sichere Klemmung aller beweglichen Teile möglich ist.

Die Figur 5 zeigt den Klemmbolzen 32 in einer Stellung, in welcher das Gegengewicht 36 nicht geklemmt ist. Im geklemmten Zustand ist die Schraube 31 weiter in den Körper 38 hineingedreht und entsprechend der Klemmbolzen 32 nach links verschwenkt. Die Anflachung 39 liegt dann unter Druck am Gegengewicht 36 an.

Das Ausführungsbeispiel erlaubt eine besonders gezielte, definierte Aufteilung der Klemmkräfte auf die zu klemmenden Elemente.

## Patentansprüche

1. Ausdrehkopf mit einem Feinverstellmechanismus (3) für den Werkzeugträger (4, 34) und einem im Werkzeugkörper (2, 38) gelagerten Gegengewicht (7, 36) das beim Verstellen des Schneidwerkzeugs (5) mittels einer Übertragungsvorrichtung (6) zum Unwuchtausgleich selbsttätig entgegengesetzt verstellt wird, und mit einem Klemmorgan (8, 32) dadurch gekennzeichnet, dass mit dem Klemmorgan (8, 32) der Werkzeugträger (4, 34) und das Gegengewicht (7, 36) gleichzeitig festklemmbar und mit dem Werkzeugkörper (2, 38) verspannbar und gegen unbeabsichtigte Verstellung fixierbar sind.

2. Ausdrehkopf nach Anspruch 1, dadurch gekennzeichnet, dass gleichzeitig auch der Feinverstellmechanismus (3) festklemmbar ist.

3. Ausdrehkopf nach Anspruch 2, dadurch gekennzeichnet, dass eine Zustellschraube (11) des Feinverstellmechanismus (3) festklemmbar ist.

4. Ausdrehkopf nach einem der Ansprüche 1 bis 3, dadurch gekennzeichnet, dass das Klemmorgan (8) zwischen das Gegengewicht (7) und den Werkzeugträger (4) eingreift.

5. Ausdrehkopf nach Anspruch 4, dadurch gekennzeichnet, dass sich das Klemmorgan (8) quer zur Drehachse (10) des Ausdrehkopfes (1) erstreckt.

6. Ausdrehkopf nach einem der Ansprüche 1 bis 5, dadurch gekennzeichnet, dass das Klemmorgan (8) eine Schraube (9) aufweist, die zwischen das Gegengewicht (7) und den Werkzeugträger (4) eingreift und gleichzeitig an das Gegengewicht (7) und den Werkzeugträger (4) anlegbar ist.

7. Ausdrehkopf nach einem der Ansprüche 1 bis 6, dadurch gekennzeichnet, dass der Werkzeugträger (4) geschlitzt ist, derart, dass eine auf den Werkzeugträger (4) ausgeübte Klemmkraft auf eine Zustellschraube (11) des Feinverstellmechanismus (3) übertragen wird.

8. Ausdrehkopf nach einem der Ansprüche 1 bis 7, dadurch gekennzeichnet, dass die Übertragungsvorrichtung (6) eine Zahnwalze (12) aufweist, die drehbar im Werkzeugkörper (2) gelagert ist und mit dem Gegengewicht (7) und dem Werkzeugträger (4) kämmt.

9. Ausdrehkopf nach Anspruch 8, dadurch gekennzeichnet, dass die Zahnwalze (12) und das Klemmorgan (8) in parallel zueinander verlaufende Bohrungen (13, 14) des Werkzeugkörpers (2) eingesetzt sind und diese Bohrungen (13, 14) quer zur Drehachse des Ausdrehkopfes (1) verlaufen.

10. Ausdrehkopf nach einem der Ansprüche 1 bis 9, dadurch gekennzeichnet, dass er einschneidig ist.

## Claims

1. Boring head with a fine-adjustment mechanism (3) for the tool carrier (4, 34) and a counterweight (7, 36) which is supported in the tool body (2, 38) and, when the cutting tool (5) is adjusted, is automatically adjusted in the opposite direction by means of a transmission device (6) for imbalance compensation, and a clamping member (8, 32), characterised in that the tool carrier (4, 34) and the counterweight (7, 36) can be simultaneously clamped by the clamping member (8, 32) and fixedly secured to the tool body (2, 38) to prevent unintentional adjustment.

2. Boring head according to claim 1, characterised in that the fine-adjustment mechanism (3) can also be clamped simultaneously.

3. Boring head according to claim 2, characterised in that an adjusting screw (11) of the fine-adjustment mechanism (3) can be clamped.

4. Boring head according to one of claims 1 to 3, characterised in that the clamping member (8) engages between the counterweight (7) and the tool carrier (4).

5. Boring head according to claim 4, characterised in that the clamping member (8) extends transversely to the axis of rotation (10) of the boring head (1).

6. Boring head according to one of claims 1 to 5, characterised in that the clamping member (8) has a screw (9) which engages between the counterweight (7) and the tool carrier (4) and can be applied simultaneously to the counterweight (7) and the tool carrier (4).

7. Boring head according to one of claims 1 to 6, characterised in that the tool carrier (4) is slotted in such a manner that a clamping force exerted upon the tool carrier (4) is transmitted to an adjusting screw (11) of the fine-adjustment mechanism (3).

8. Boring head according to one of claims 1 to 7, characterised in that the transmission device (6) has a toothed roll (12) which is rotatably supported in the tool body (2) and meshes with the counterweight (7) and the tool carrier (4).

9. Boring head according to claim 8, characterised in that the toothed roll (12) and the clamping member (8) are inserted into parallel bores (13, 14) in the tool body (2) and these bores (13, 14) extend transversely to the axis of rotation of the boring head (1).

10. Boring head according to one of claims 1 to 9, characterised in that it is single-edged.

## Revendications

1. Tête d'alésage comportant un mécanisme de réglage précis (3) pour le porte-outil (4,34) et un contrepoids (7,36) monté dans le corps (2,38) de l'outil et qui, lors du réglage de l'outil de coupe (5) est réglé automatiquement en sens opposé à l'aide d'un dispositif de transmission (6), pour compenser le balourd, et comportant un organe de blocage (8,32), caractérisée en ce que le porte-outil (4,34) et le contrepoids (7,36) peuvent être bloqués simultanément à l'aide de l'organe de blocage (8,32) et peuvent être serrés avec le corps (2,38) de l'outil et peuvent être fixés contre tout déplacement de réglage intempestif.

2. Tête d'alésage selon la revendication 1, caractérisée en ce que le mécanisme de réglage précis (3) peut être également bloqué simultanément.

3. Tête d'alésage selon la revendication 2, caractérisée en ce qu'une vis d'avance (11) du mécanisme de réglage précis (3) peut être bloquée.

4. Tête d'alésage selon l'une des revendications 1 à 3, caractérisée en ce que l'organe de blocage (8) s'engage entre le contrepoids (7) et le porte-outil (4).

5. Tête d'alésage selon la revendication 4, caractérisée en ce que l'organe de blocage (8) s'étend transversalement par rapport à l'axe de rotation (10) de la tête d'alésage (1).

6. Tête d'alésage selon l'une des revendications 1 à 5, caractérisée en ce que l'organe de blocage (8) possède une vis (9), qui s'engage entre le contrepoids (7) et le porte-outil (4) et peut être appliquée simultanément contre le contrepoids (7) et contre le porte-outil (4).

7. Tête d'alésage selon l'une des revendications 1 à 6, caractérisée en ce que le porte-outil (4) est fendu de telle sorte qu'une force de serrage appliquée au porte-outil (4) est transmise à une vis d'avance (11) du mécanisme de réglage précis (3).

8. Tête d'alésage selon l'une des revendications 1 à 7, caractérisée en ce que le dispositif de transmission (6) possède un cylindre denté (12), qui est monté de manière à pouvoir tourner dans le corps (2) de l'outil et engrène avec le contrepoids (7) et le porte-outil (4).

9. Tête d'alésage selon la revendication 8, caractérisée en ce que le cylindre denté (12) et l'organe de blocage (8) sont insérés dans des perçages (13,14) du corps (2) de l'outil, qui sont parallèles entre eux, et que ces perçages (13,14) s'étendent transversalement par rapport à l'axe de rotation de la tête d'alésage (1).

10. Tête d'alésage selon l'une des revendications 1 à 9, caractérisée en ce qu'elle comporte un seul tranchant.
